# EUROPÄISCHE PATENTSCHRIFT

(11) **EP 2 487 069 B1**
(45) Veröffentlichungstag und Bekanntmachung des Hinweises auf die Patenterteilung: **09.04.2014**
(21) Anmeldenummer: 11154400.3
(22) Anmeldetag: 14.02.2011
(51) Int. Cl.: B60R 1/04

(54) **Innenrückblickeinheit für Kraftfahrzeuge**
Inner rear view unit for motor vehicles
Unité de rétroviseur intérieur pour véhicules automobiles

(43) Veröffentlichungstag der Anmeldung: 15.08.2012
(73) Patentinhaber: SMR Patents S.à.r.l., 1653 Luxembourg (LU)
(72) Erfinder: Liesener, Alf, 73614, Schorndorf (DE)
(74) Vertreter: Weber-Bruls, Dorothée

(56) Entgegenhaltungen:
- EP-A2- 1 574 393
- WO-A2-2011/005235
- DE-A1- 19 519 619
- DE-A1- 19 852 873
- DE-A1-102008 018 397
- JP-A- 60 157 939
- US-A- 5 706 144

## Beschreibung

Die Erfindung betrifft eine Innenrückblickeinheit für ein Kraftfahrzeug gemäß dem Oberbegriff des Anspruchs 1.

Um einem Fahrer eines Kraftfahrzeugs einen Einblick in einen oder mehrere Bereiche einer Fahrzeugumgebung zu ermöglichen, die bei auf den Fahrbahnverlauf gerichtetem Blickfeld des Fahrers von dessen Sitzplatz aus nicht einsehbar sind, sind Rückblickeinheiten bzw. -einrichtungen bekannt, welche nach deren technischer Ausgestaltung in Rückblickspiegelanordnungen und Rückblickkameraanordnungen sowie nach dem Bereich der Fahrzeugumgebung, in welchen sie Einblick gewähren in Innen- und Außenrückblickeinheiten unterteilt werden können.

Erstere bedienen sich im Wesentlichen einer oder mehrerer kurz unter dem Begriff Spiegel zusammengefasster verspiegelter Flächen, Zweitere im Wesentlichen eines oder mehrerer unter dem Begriff Außenkamera zusammengefasster, beispielsweise bilderfassender bzw. bildgebender Sensoren sowie mindestens eines unter dem Begriff Anzeigevorrichtung zusammengefassten Displays oder Bildschirms zur natürlichen oder abstrakten Darstellung zumindest eines von wenigstens einer Außenkamera erfassten Bereichs der Fahrzeugumgebung.

Innen- und Außenrückblickeinheiten unterscheiden sich demgegenüber dadurch, dass Innenrückblickeinheiten entsprechend einem im Fahrzeuginnenraum untergebrachten Spiegel Einblick in einen typischerweise vom Fahrzeuginnenraum aus gesehen mittig hinter dem Kraftfahrzeug liegenden Bereich der Fahrzeugumgebung gestatten, wohingegen Außenrückblickeinheiten entsprechend außen seitlich am Kraftfahrzeug angeordneter Spiegel Einblick in seitlich neben und hinter dem Kraftfahrzeug liegende Bereiche der Fahrzeugumgebung gestatten.

Die Spiegel von Rückblickspiegelanordnungen sind vorzugsweise in einem peripheren Sichtfeld des Fahrers und gleichzeitig an einer Einbauposition angeordnet, von welcher aus ein Einblick in einen typischerweise rückwärtig des Sitzplatzes des Fahrers liegenden Bereich der Fahrzeugumgebung möglich ist. Ein peripheres Sichtfeld kennzeichnet sich hierbei dadurch aus, dass es bei auf den Fahrbahnverlauf gerichtetem Blickfeld des Fahrers in dessen peripherem Blickfeld liegt jedoch beispielsweise durch eine Veränderung der Blickrichtung, beispielsweise durch Schwenken der Augen oder Drehen des Kopfes, in dessen unmittelbares Blickfeld gerückt werden kann.

Die Spiegel von Rückblickspiegelanordnungen bilden dabei vom Fahrer eines Kraftfahrzeugs einsehbare Projektionsflächen für diejenigen Bereiche der Fahrzeugumgebung in welche die jeweiligen Rückblickspiegelanordnungen Einblick gewähren.

Beispiele für Rückblickspiegelanordnungen und deren Unterbringung sind an der Windschutzscheibe oder einem diese umgebenden Rahmen oder beispielsweise an einer Konsole am Dachhimmel von Kraftfahrzeugen angeordnete Innenrückblickspiegelanordnungen sowie ein- oder beidseitig außen an den Karosserieflanken, beispielsweise an der Fahrer- und an der Beifahrertür montierte Außenrückblickspiegelanordnungen.

Vorteile von Rückblickspiegelanordnungen sind der gewohnte Umgang mit ihnen, deren gewohnte, möglicherweise gerade deshalb als vorteilhaft empfundene Unterbringung am und/oder im Kraftfahrzeug sowie deren gewohnte Abbildung des mit ihrer Hilfe einsehbaren Bereichs der Fahrzeugumgebung. Innenrückblickspiegelanordnungen bieten den zusätzlichen Vorteil einer Zurverfügungstellung einer zentralen, hochgesetzten Unterbringungsmöglichkeit für im Fahrzeuginnenraum vorzugsweise an erhabener Einbauposition anzuordnende elektrische Komponenten. Beispiele solcher elektrischer Komponenten sind:
- eine bei geöffneter Fahrzeugtür und/oder gesondert eingeschaltete Innenraumbeleuchtung,
- eine ambiente Innenraumbeleuchtung,
- eine Lesebeleuchtung,
- ein Mikrofon und/oder einen oder mehrere Lautsprecher eines Telefonsystems und/oder einer Fahrzeuginnenraumbeschallung,
- Sensoren zur Fahrzeuginnenraumklimatisierung,
- Sensoren zur Sitzplatzbelegungserkennung
- eine von außen durch die Windschutzscheibe hindurch sichtbare Anzeigevorrichtung beispielsweise einer elektronischen Parkscheibe und/oder eines Mautsystems,
- eine vom Fahrzeuginnenraum einsehbare Anzeigevorrichtung beispielsweise eines Kompass und/oder eines Informationssystems, beispielsweise zur Anzeige von Warnmeldungen.

Selbstverständlich umfasst diese Aufzählung nur wenige Beispiele einer Vielzahl möglicher, allein oder in beliebiger Kombination von einer Innenrückblickspiegelanordnung zumindest zum Teil beherbergbarer elektrischer Komponenten.

Nachteilig an Rückblickspiegelanordnungen ist deren auch als toter Winkel bezeichneter, durch deren Unterbringungspositionen vorgegeben eingeschränkter Einblick in bestimmte Bereiche der Fahrzeugumgebung.

Bei einer Rückblickkameraanordnung ist die Anordnung der Anzeigevorrichtung demgegenüber unabhängig vom einzublickenden Bereich der Fahrzeugumgebung. Hierbei werden die eine oder mehreren Außenkameras an geeigneten Stellen am oder im Kraftfahrzeug verbaut und übertragen die von ihnen erfassten Signale zur visuellen Darstellung für den Fahrer auf eine oder mehrere in dessen unmittelbarem oder peripherem Blickfeld angeordnete Anzeigevorrichtungen.

Die Anzeigevorrichtungen von Rückblickkameraanordnungen bilden dabei vom Fahrer eines Kraftfahrzeugs einsehbare Projektionsflächen für diejenigen Bereiche der Fahrzeugumgebung, in welche die jeweiligen Außenkameras der Rückblickkameraanordnungen Einblick gewähren.

Sowohl bei Rückblickspiegelanordnungen, als auch bei Rückblickkameraanordnungen kann es unerlässlich sein, eine individuelle Einstellung der Rückblickeinrichtung vorzunehmen, beispielsweise eine Verstelllage eines oder mehrerer Spiegelgläser zu verändern oder beispielsweise eine Auswahl etwa der Darstellung eines Ausschnitts eines vermittels einer oder mehrerer Außenkameras erfassten Bereichs oder eines Bereichs von mehreren vermittels einer oder mehrerer Außenkameras erfasster Bereiche zu treffen. Bei Innenrückblickspiegelanordnungen kann die Vornahme individueller Einstellungen der Innenrückblickspiegelanordnung darüber hinaus eine oder mehrere zumindest zum Teil von der Innenrückblickspiegelanordnung beherbergte elektrische Komponenten betreffen.

Unter anderem hierzu sind eine Vielzahl von Schaltern, Knöpfen und Tasten im Fahrzeuginnenraum verteilt angeordnet, welche durch deren Auswahl und Bedienung eine nicht unerhebliche Ablenkung vom Verkehrsgeschehen und damit eine teils erhebliche Beeinträchtigung der Verkehrssicherheit zur Folge haben können.

Durch DE 10 2005 030 968 B4 ist ein Verfahren bekannt, bei dem die Blickrichtung eines Fahrers eines Kraftfahrzeugs mittels eines beispielsweise als CMOS-Kamera ausgeführten, im Fahrzeuginnenraum angeordneten bilderfassenden bzw. bildgebenden Sensors erfasst wird und basierend auf der Auswertung der Blickrichtung eine Ausrichtung der Verstelllage des Spiegelkopfs und/oder des Spiegelglases einer Innenrückblickspiegelanordnung erfolgt. Für die Ermittlung der idealen Verstelllage werden der Schnittpunkt der Blickrichtung mit einem bestimmten Punkt auf der Oberfläche des Spiegelglases und die Zeitdauer berücksichtigt, über welche der Punkt betrachtet wird.

Durch DE 102007 051 543 A1 ist eine Einstellvorrichtung für einen Parameter einer Fahrzeugkomponente bekannt. Die Einstellvorrichtung umfasst eine Erfassungsvorrichtung mit der eine durch Translationsfreiheitsgrade definierte Position und/oder eine durch Rotationsfreiheitsgrade definierte Orientierung eines Körperteils wenigstens eines Fahrzeuginsassen im Fahrzeuginnenraum erfassbar ist. Die Einstellvorrichtung ist in einem ersten Betriebsmodus betreibbar, in dem mit der Einstellvorrichtung die Einstellung des Parameters in Abhängigkeit von der erfassten Position und/oder Orientierung des Körperteils vorgenommen werden kann. Bei der Einstellung der Fahrzeugkomponente handelt es sich beispielsweise um die Einstellung der Sitzposition, Innen- und Außenspiegeleinstellungen, Einstellungen der Gurthöhenverstelleinrichtung, Einstellung der Lage im Raum eines Head-up-Displays, Einstellung der Höhe und/oder der Neigung einer Kopfstütze. Bei der Fahrzeugkomponente handelt es sich beispielsweise um eine Präsentationseinrichtung zur optischen Präsentation einer visuell wahrnehmbaren Information. Dabei ist die Einstellvorrichtung ausgelegt, um die Präsentationseinrichtung in eine Lage im Raum zu bewegen, derart, dass der Präsentationsort, welcher als derjenige Ort definiert ist, an dem die visuell wahrnehmbare Information der Wahrnehmung des Fahrzeuginsassen nach erscheint, in eine den ergonomischen Bedürfnissen des Fahrzeuginsassen angepasste Lage relativ zum Körperteil bewegt wird. Die Präsentationseinrichtung kann eine Innenrückblickspiegelanordnung, eine Außenrückblickspiegelspiegelanordnung oder eine Anzeigeeinrichtung wie beispielsweise ein Head-up-Display sein.

US 5,706,144, die eine Innenrückblickeinheit gemäß dem Oberbegriff des Anspruchs 1 offenbart, beschreibt ein Verfahren und eine Vorrichtung zum automatischen justieren einer Orientierung von Innen- und/oder Außenrückblickeinheiten eines Kraftfahrzeugs. Dabei wird von einer Erfassungseinrichtung permanent eine Position der Augen des Fahrers, eine Blickrichtung des Fahrers und/oder eine Distanz zwischen den Augen des Fahrers und der Innen- und/oder Außenrückblickeinheit ermittelt, um aus diesen Daten eine optimale Einstellung der Orientierung der Innen- und/oder Außenrückblickeinheit vorzunehmen.

DE 198 52 873 A1 beschreibt ein Verfahren zur Einstellung einer Innen- und/oder Außenrückblickeinheit, bei dem in einem ersten Schritt eine Position der Augen eines Fahrers ermittelt wird. In einem weiteren Schritt wird dann eine Einstellung einer optischen Einrichtung, insbesondere eine Winkelstellung einer Innen- und/oder Außenrückblickeinheit, an die ermittelte Position der Augen angepasst.

DE 195 19 619 A1 beschreibt eine Vorrichtung zur elektrischen Verstellung einer Innen- und Außenrückblickeinrichtung, die mittels einer Sensorik in den Sitzen des Kraftfahrzeugs eine Größe und Sitzposition des Fahrers ermittelt und auf Grund vorbekannter, statistisch ermittelter Voreinstellungen eine Justierung einer Einstellung der Innen- und Außenrückblickeinrichtung vornimmt. Ferner sind Infrarotsensoren vorgesehen, die kontinuierlich eine genaue Kopfposition des Fahrers ermitteln und auf Grundlage dieser ermittelten Kopfposition eine Nachjustierung der Innen- und Außenrückblickeinheit steuern.

WO 2011/005235 A2 beschreibt Innen- und Außenrückblickeinheiten, deren Winkeleinstellung bei einer Körperbewegung des Fahrers, beispielsweise einem Vorbeugen, an die aktuelle Körperposition angepasst werden, um stets einen optimalen Blickwinkeln für den Fahrer zu ermöglichen.

EP 1 574 393 A2 beschreibt ein Verfahren zum Ausrichten eines Spiegels eines Kraftfahrzeugs, bei dem mittels einer Innenraumsensorik eine Kopf- bzw. Augenposition des Fahrers ermittelt wird und auf Grund der so ermittelten Werte eine Orientierung der Innen- und/oder Außenspiegel des Kraftfahrzeugs erfolgt.

Eine Aufgabe der Erfindung ist die Entwicklung einer Innenrückblickeinheit, welche nachhaltig die Verkehrssicherheit eines hiermit ausgestatteten Kraftfahrzeugs erhöht.

Die Aufgabe wird gelöst mit den Merkmalen des unabhängigen Anspruchs.

Demnach ist eine Innenrückblickeinheit für Kraftfahrzeuge vorgesehen, mit einem Fuß zur kraftfahrzeugseitigen Anordnung vorzugsweise an einem erhabenen Einbauort im Fahrzeuginnenraum, beispielsweise im oberen Teil der Windschutzscheibe oder oberhalb der Windschutzscheibe, wie etwa an der Innenseite einer Windschutzscheibe oder an einem diese umgebenden Rahmen oder beispielsweise an einer Konsole am Dachhimmel eines Kraftfahrzeugs, und einen an diesem vorzugsweise gelenkig angeordneten und zumindest zum Teil eine Projektionsfläche beherbergenden Kopf.

In der Innenrückblickeinheit ist eine Einrichtung zur Erkennung von Gesten vorzugsweise innerhalb einer vorgegebenen, beispielsweise in Blickrichtung eines Fahrers eines Kraftfahrzeugs gesehen vor der Innenrückblickeinheit und/oder unterhalb der Innenrückblickeinheit liegenden, vorzugsweise eng begrenzten Partie des Fahrzeuginnenraums untergebracht.

Die Erkennung von Gesten zeichnet sich durch die Erfassung zumindest unterschiedlicher Positionen und/oder Orientierungen mindestens eines Körperteils eines Fahrzeuginsassen vorzugsweise innerhalb der vorgegebenen Partie des Fahrzeuginnenraums aus. Dabei kann die Position eines Körperteils durch dessen Translationsfreiheitsgrade bzw. durch den von diesem eingenommenen Ort ausgehend von einem beispielsweise durch die geometrische Mitte der Projektionsfläche der Innenrückblickeinheit gegebenen Ursprung definiert sein, wohingegen die Orientierung eines Körperteils durch dessen Rotationsfreiheitsgrade bzw. durch die von diesem eingenommene Lage ausgehend von einer beispielsweise durch die Normale zur Ebene der Projektionsfläche gegebene Raumrichtung definiert sein kann.

Die Erfassung kann vorzugsweise sowohl die Einnahme, als auch die zeitliche Änderung von Position und/oder Orientierung des mindestens einen Körperteils vorzugsweise innerhalb der vorgegebenen Partie des Fahrzeuginnenraums einschließen.

Abhängig von verschiedenen erkannten Gesten und/oder von der Anzahl an Wiederholungen gleichartiger erkannter Gesten und/oder von einer Folge von erkannten Gesten erzeugt die Einrichtung zur Erkennung von Gesten unterschiedliche Steuersignale zur beispielsweise elektrischen oder elektromotorischen Vornahme zumindest einer individuellen Einstellung wenigstens der Innenrückblickeinheit.

Vorteile gegenüber dem Stand der Technik ergeben sich unter anderem dadurch, dass durch Ausführung von Gesten beispielsweise vor und/oder unterhalb der Innenrückblickeinheit zur Erzeugung von Steuersignalen, vermittels denen individuelle Einstellungen der Innenrückblickeinheit vorgenommen werden, im Vergleich zu einer Suche nach im Fahrzeuginnenraum verteilt angeordneten Schaltern, Knöpfen und Tastern eine wesentliche geringere Ablenkung vom Verkehrsgeschehen und damit eine Steigerung der Verkehrssicherheit erhalten wird. Darüber hinaus wird durch die Unterbringung in einer Innenrückblickeinheit einerseits ein erhabener Einbauort für elektrische Komponenten zur Verfügung gestellt, welche ebenfalls vermittels Gesten individuell eingestellt werden können, und andererseits durch die sich vorzugsweise aus der Blickrichtung des Fahrers aus gesehen vor und/oder unterhalb der Innenrückblickeinheit erstrechenden Partie des Fahrzeuginnenraums ein Raumbereich geschaffen wird, der einfach und ohne Suchen sowie ohne Ablenkung vom Verkehrsgeschehen beispielsweise mittels einer Hand des Fahrers des Kraftfahrzeugs erreichbar ist. Ein zusätzlicher Vorteil ergibt sich durch die Möglichkeit, für rechts- und linksgelenkte Fahrzeuge im Vergleich zum Stand der Technik weniger unterschiedliche Bauteile zu benötigen, sofern die Vornahme individueller Einstellungen beispielsweise von in der Innenrückblickeinheit oder andernorts im Fahrzeuginnenraum oder im oder am Kraftfahrzeug untergebrachter elektrischer Komponenten durch Gesten erfolgt, die von der Einrichtung zur Erkennung von Gesten erkannt und in Steuersignale bzw. -befehle umgewandelt werden. Beim Stand der Technik sind hierfür für rechts- und linksgelenkte Kraftfahrzeuge bislang unterschiedliche Schalterpaneele erforderlich, die entsprechend der Anordnung des Lenkrads an unterschiedlichen Einbauorten im Kraftfahrzeug untergebracht werden.

Die Einrichtung zur Erkennung von Gesten kann beispielsweise eine oder mehrere bilderfassende bzw. bildgebende Kameras umfassen, welche eine Partie des Fahrzeuginnenraums, vorzugsweise eine aus in Blickrichtung eines Fahrers des Kraftfahrzeugs gesehen vor der Innenrückblickeinheit und/oder unterhalb der Innenrückblickeinheit liegende, eng begrenzte Partie des Fahrzeuginnenraums überwachen. Die erfassten Bilder der Partie können beispielsweise anhand eines Bildverarbeitungsverfahrens ausgewertet werden, um Position und/oder Orientierung sowie gegebenenfalls die Änderungsgeschwindigkeiten von Position und/oder Orientierung mindestens eines Körperteils eines Fahrzeuginsassen zu bestimmen und hieraus eine Geste zu ermitteln. Abhängig von einer oder mehreren derart ermittelten Gesten kann die Einrichtung zur Erkennung von Gesten unterschiedliche Steuersignale abgeben.

Die mindestens eine Kamera kann in einem für das menschliche Auge sichtbaren Wellenlängenbereich arbeiten. Alternativ oder zusätzlich ist denkbar, dass die mindestens eine Kamera im infraroten Wellenlängenbereich arbeitet. Dies hat eine verbesserte Erfassung von Gesten bei Dunkelheit zur Folge. Ebenfalls ist eine Verwendung von Ultraschallsensoren denkbar, welche anhand beispielsweise mehrerer Abstandssignale Position und/oder Orientierung eines oder mehrerer Körperteile eines Fahrzeuginsassen erfassen können, um hieraus eine Geste zu ermitteln bzw. abzuleiten.

Darüber hinaus ist die Verwendung magnetischer und/oder kapazitiver Sensoren denkbar, um Position und/oder Orientierung eines oder mehrerer Körperteile eines Fahrzeuginsassen innerhalb der Partie des Fahrzeuginnenraums erfassen zu können.

Auch eine beliebige Kombination der beschriebenen Arten der Erfassung von Position und/oder Orientierung eines oder mehrerer Körperteile eines Fahrzeuginsassen sind möglich. Hierdurch werden einerseits eine hohe Redundanz und andererseits eine hohe Güte der Erfassung durch Verifikation von auf unterschiedliche Arten ermittelter Gesten erzielt.

Beispielsweise kann eine Partie des Fahrzeuginnenraums, innerhalb welcher Gesten erkannt werden, dadurch eng begrenzt werden, indem zwei oder mehrere, beispielsweise an unterschiedlichen Einbauorten von der Innenrückblickeinheit beherbergten Kameras und/oder Sensoren vorgesehen sind, welche jeweils von ihrem Einbauort aus gesehen einen bestimmten Raumwinkel überwachen und auf einen bestimmten Überwachungsort ausgerichtet sind. Die von den Kameras und/oder Sensoren überwachten Raumbereiche weisen einen von allen beteiligten Kameras und/oder Sensoren gemeinsam überwachten, eng begrenzten Schnittraum auf, welcher die Partie des Fahrzeuginnenraums bilden kann. Vorzugsweise wird hierbei insbesondere bei bildgebenden Kameras und bildgebenden Sensoren auf Weitwinkeloptiken verzichtet. Vereinfacht sind die von den Kameras und/oder Sensoren überwachten Raumbereiche kegelförmig mit einem dem Raumwinkel entsprechenden Öffnungswinkel. Bei entsprechend ausgebildeten Kameras und/oder Sensoren können auch von der Kegelform abweichende Raumbereiche auftreten.

Alternativen zur Begrenzung der Partie des Fahrzeuginnenraums ergeben sich beispielsweise durch die Verwendung einer oder mehrerer Kameras und eines oder mehrerer Abstandssensoren. Erst wenn ein Körperteil, dessen Position und Lage zur Erkennung einer Geste erfasst werden soll, einen bestimmten Mindestabstand zu einem oder mehreren in der Innenrückblickeinheit untergebrachten Abstandssensoren unterschreitet, beginnt die Erfassung von Position und Orientierung des Körperteils beispielsweise vermittels einer oder mehrerer Kameras und/oder Sensoren. Als Abstandssensoren kommen beispielsweise bereits erwähnte Ultraschallsensoren und/oder magnetische und/oder kapazitive Sensoren in Frage.

Kopf und Fuß der Innenrückblickeinheit können beispielsweise vermittels eines Kugelgelenks gelenkig miteinander verbunden sein, so dass der Kopf gegenüber dem Fuß zumindest in eine individuelle Verstelllage einstellbar ist. Ist ein elektromotorischer Verstellantrieb für die gelenkige Verbindung zwischen Kopf und Fuß vorgesehen, so kann die Vornahme der individuellen Einstellung der Verstelllage elektromotorisch erfolgen. Ein gegebenenfalls vorgesehener Speicher kann zur Abspeicherung mindestens einer individuellen Verstelllage vorgesehen sein, so dass durch Abrufen des Speichers die mindestens eine im Speicher abgelegte individuelle Verstelllage wiederholbar genau einstellbar ist. Sowohl die elektromotorische Einstellung der Verstelllage, als auch das Überschreiben sowie das Abrufen eines gegebenenfalls vorgesehenen Speichers können vermittels Gesten bzw. gestengesteuert erfolgen.

Die Innenrückblickeinheit kann wenigstens eine elektrische Komponente aufweisen, für die vermittels eines oder mehrerer durch mindestens eine Geste erzeugbarer Steuersignale der Einrichtung zur Erkennung von Gesten eine individuelle Einstellung vorgenommen werden kann. Beispiele solcher elektrischer Komponenten und der Vornahme deren individueller Einstellungen sind:
- ein elektromotorischer Verstellantrieb zur Einstellung einer individuellen Verstelllage des Kopfs gegenüber dem Fuß oder der Projektionsfläche gegenüber dem Kopf abhängig von Größe und Sitzposition des Fahrers des Kraftfahrzeugs,
- eine Innenraumbeleuchtung, welche zur individuellen Einstellung in ihrer Helligkeit verändert und/oder in ihrem Betrieb zwischen ausgeschaltet oder bei geöffneter Fahrzeugtür eingeschaltet oder dauerhaft eingeschaltet umgeschaltet werden kann,
- eine ambiente Innenraumbeleuchtung, welche zur individuellen Einstellung ein- und ausgeschaltet und/oder in ihrer Helligkeit verändert werden kann,
- eine Lesebeleuchtung, welche zur individuellen Einstellung in ihrer Helligkeit verändert und/oder in ihrem Betrieb zwischen ausgeschaltet oder bei geöffneter Fahrzeugtür eingeschaltet oder dauerhaft eingeschaltet umgeschaltet werden kann,
- ein Mikrofon und/oder einen oder mehrere Lautsprecher eines Telefonsystems und/oder einer Fahrzeuginnenraumbeschallung, welche zu deren individueller Einstellung ein- und ausgeschaltet und/oder in deren Empfindlichkeit oder Lautstärke verändert werden können,
- Sensoren einer Fahrzeuginnenraumklimatisierung, welche zur individuellen Einstellung vollständig ein- und ausgeschaltet, in Bezug auf die einzuhaltende Temperatur im Fahrzeuginnenraum verändert oder zwischen einem Betrieb beispielsweise einer Kältemaschine und deren Nichtbetrieb umgeschaltet werden kann,
- eine von außen durch die Windschutzscheibe hindurch sichtbare Anzeigevorrichtung beispielsweise einer elektronischen Parkscheibe und/oder eines Mautsystems, welche zu deren individueller Einstellung vollständig ein- und ausgeschaltet sowie in Bezug auf deren Anzeige verstellt werden können,
- eine vom Fahrzeuginnenraum aus einsehbare Anzeigevorrichtung beispielsweise eines Kompass und/oder eines Informationssystems, beispielsweise zur Anzeige von Warnmeldungen, welche zu deren individueller Einstellung vollständig ein- und ausgeschaltet sowie in Bezug auf deren Anzeige verstellt werden können.

Beispielsweise ist denkbar, zur Einstellung der Helligkeit einer Innenraumbeleuchtung und/oder einer ambienten Innenraumbeleuchtung und/oder einer Lesebeleuchtung, den Grad einer Dimmung vorzugsweise vermittels Ausführung einer oder mehrerer Gesten bevorzugt innerhalb der in Blickrichtung des Fahrers gesehen vor und/oder unterhalb der Innenrückblickeinheit befindlichen Partie des Fahrzeuginnenraums individuell einzustellen. So kann der Grad einer Abdimmung durch eine Geste gesteuert werden, bei der beispielsweise die Finger einer Hand zusammengeführt werden. Die Strecke, welche die Fingerspitzen dabei aufeinander zu zurücklegen sowie gegebenenfalls die Geschwindigkeit, mit der dies geschieht, kann als ein Maß für den Grad der Abdimmung herangezogen werden. Auf dieselbe Art und Weise kann ein Aufdimmen durch eine Geste verwirklicht gesteuert sein, welche beispielsweise ein Auseinanderführen zweier Finger einer Hand vorsieht. Alternativ ist denkbar, nach Erreichen einer maximal möglichen Abdimmung bzw. Aufdimmung durch Wiederholung ein und derselben Geste zyklisch auf- bzw. abzudimmen. Hierbei können auch diskrete Schritte für den Grad der Ab- bzw. Aufdimmung verwendet werden, die durch wiederholtes Ausführen derselben Gesten eine nach der anderen abgerufen werden.

Vorzugsweise kann wenigstens ein vermittels mindestens einer Geste erzeugbares Steuersignal der Einrichtung zur Erkennung von Gesten zur beispielsweise elektrischen oder elektromotorischen Vornahme wenigstens einer individuellen Einstellung einer außerhalb bzw. nicht von der Innenrückblickeinheit untergebrachten elektrischen Komponente des Kraftfahrzeugs vorgesehen sein. Beispielsweise kann es sich bei einer solchen elektrischen Komponente um eine zur Vornahme einer individuellen Einstellung einer Außenrückblickeinheit vorgesehene elektromotorische Antriebseinheit handeln. Alternative oder zusätzliche Beispiele für außerhalb der Innenrückblickeinheit im oder am Kraftfahrzeug untergebrachte elektrische Komponenten sind nachfolgend angeführt.

Beispielsweise kann eine Einstellung eines mit einer elektrischen Sitzverstellung ausgestatteten Sitzplatzes vermittels Gesten individuell vorgenommen werden. Hierbei kann beispielsweise der Sitz durch eine Handgeste simuliert und durch eine Veränderung beispielsweise der Neigung der Finger gegenüber der Handfläche die Neigung der Sitzlehne eingestellt werden.

Beispielsweise können individuelle Einstellungen eines Telefonsystems und/oder einer Kraftfahrzeugbeschallung und/oder einer Unterhaltungseinrichtung des Kraftfahrzeugs vermittels Gesten individuell eingestellt werden. Dabei kann jede denkbare Art von Bedienung, wie etwa die Annahme oder das Beenden eines Telefongesprächs, Sendersuchlauf, Titelsprung etc. als eine individuelle Einstellung angesehen werden.

Grundsätzlich kann jede Einstellung elektrischer, elektromechanischer oder elektronischer Einrichtungen eines Kraftfahrzeugs vermittels Steuersignalen der in der Innenrückblickeinheit untergebrachten Einrichtung zur Erkennung von Gesten individuell vorgenommen werden.

Bei der Innenrückblickeinheit kann es sich beispielsweise um eine Innenrückblickspiegelanordnung handeln. Die Projektionsfläche ist hierbei bevorzugt als ein Spiegelglas, besonders bevorzugt als ein Keilspiegelglas ausgeführt.

Die gelenkige Verbindung zwischen Kopf und Fuß kann insbesondere bei einer Ausgestaltung der Innenrückblickeinheit als Innenrückblickspiegelanordnung einen Abklappmechanismus umfassen, vermittels dem der Spiegelkopf bzw. der Innenrückblickspiegel um einen definierten Schwenkwinkel aus einer Betriebsstellung um eine im Wesentlichen horizontale Achse in eine Abklappstellung und umgekehrt verschwenkt werden kann, um eine Blendung durch rückwärtige Lichtquellen in der Abklappstellung abzumindern. Für das Verschwenken aus der Betriebsstellung in die Abklappstellung und umgekehrt kann ein elektromotorischer Verstellantrieb vorgesehen sein. Der elektromotorische Stellantrieb kann durch Steuersignale bzw. -befehle der Einrichtung zur Erkennung von Gesten gesteuert sein. Dadurch kann das Verschwenken aus der Betriebsstellung in die Abklappstellung und umgekehrt vermittels einer oder mehrerer Gesten als individuelle Einstellung vorgenommen werden. Beispielsweise kann durch Wiederholung einer Geste wiederholt ein Verschwenken aus der Betriebsstellung in die Abklappstellung und umgekehrt erfolgen. Alternativ oder zusätzlich ist denkbar eine erste Geste zur Erzeugung eines Steuersignals bzw. -befehls vorzusehen, vermittels dem der Kopf gegenüber dem Fuß aus der Betriebsstellung in die Abklappstellung verschwenkt wird. Eine zweite, beispielsweise der ersten Geste entgegengesetzte Geste kann zum Verschwenken aus der Abklappstellung in die Betriebsstellung vorgesehen sein. Dadurch kann ein bei Innenrückblickspiegelanordnungen mit einem Abklappmechanismus nach dem Stand der Technik bekannter Kipphebelmechanismus simuliert werden, ohne die Nachteile eines latenten Verstellens der Betriebs- und Abklappstellung durch Berühren und Betätigen eines am Kopf untergebrachten Kipphebels in Kauf nehmen zu müssen.

Zur Vermeidung einer Blendung durch rückwärtige Lichtquellen ist sowohl alternativ als auch zusätzlich zu einem Abklappmechanismus bekannt, eine elektrochromatische Abblendung des Spiegelglases vorzusehen. Hierbei ist die Projektionsfläche als ein elektrochromatisch abblendbares Spiegelglas ausgeführt. Für eine gegebenenfalls vorgesehene automatische Abblendung kann eine mit einem Helligkeitssensor zur Erfassung von rückwärtigen Lichtquellen verbundene Steuerschaltung vorgesehen sein. Alternativ oder zusätzlich zur automatischen Abblendung kann vorgesehen sein, beispielsweise durch Wiederholung einer Geste zwischen einem abgeblendeten und einem aufgeblendeten Zustand des elektrochromatisch abblendbaren Spiegelglases hin-und herzuschalten. Für das Abblenden und das Aufblenden können auch unterschiedliche Gesten vorgesehen sein. Darüber hinaus ist denkbar, den Grad der Abblendung vorzugsweise ebenfalls vermittels Ausführung einer oder mehrerer Gesten vorzugsweise innerhalb der in Blickrichtung des Fahrers gesehen vor und/oder unterhalb der als Innenrückblickspiegelanordnung ausgebildeten Innenrückblickeinheit befindlichen Partie des Fahrzeuginnenraums individuell einzustellen. So kann der Grad einer Abblendung durch eine Geste gesteuert werden, bei der beispielsweise die Finger einer Hand zusammengeführt werden. Die Strecke, welche die Fingerspitzen dabei aufeinander zu zurücklegen sowie gegebenenfalls die Geschwindigkeit, mit der dies geschieht, kann als ein Maß für den Grad der Abblendung herangezogen werden. Auf die selbe Art und Weise kann eine Aufblendung durch eine Geste verwirklicht gesteuert sein, welche beispielsweise ein Auseinanderführen zweier Finger einer Hand vorsieht. Alternativ ist denkbar, nach Erreichen einer maximal möglichen Abblendung bzw. Aufblendung durch Wiederholung ein und derselben Geste zyklisch auf- bzw. abzublenden. Hierbei können auch diskrete Schritte für den Grad der Ab- bzw. Aufblendung verwendet werden, die durch wiederholtes Ausführen der selben Gesten eine nach der anderen abgerufen werden.

Bei der Innenrückblickeinheit kann es sich alternativ um eine Innenrückblickkameraanordnung handeln. Die Projektionsfläche ist hierbei als eine Anzeigevorrichtung zur wenigstens zeitweise Darstellung mindestens eines Ausschnitts wenigstens eines Teils eines von zumindest einer Außenkamera der Innenrückblickkameraanordnung eingesehenen Bereichs der Fahrzeugumgebung ausgeführt.

Durch wiederholte Ausführung einer oder durch Ausführung mehrerer unterschiedlicher Gesten vorzugsweise innerhalb der in Blickrichtung des Fahrers gesehen vor und/oder unterhalb der als Innenrückblickkameraanordnung ausgebildeten Innenrückblickeinheit befindlichen Partie des Fahrzeuginnenraums kann beispielsweise:
- eine Veränderung der Helligkeit der Darstellung der Anzeigevorrichtung, beispielsweise durch Auseinander- und/oder Zusammenführen zweier Finger einer Hand, und/oder
- eine Auswahl der Darstellung eines oder mehrerer von unterschiedlichen Kameras eingesehener Bereiche auf der Anzeigevorrichtung, beispielsweise durch ein Vorbeiwinken von rechts nach links oder umgekehrt, und/oder
- eine Auswahl eines Ausschnitts einer ausgewählten Darstellung auf der Anzeigevorrichtung beispielsweise durch auf die Anzeigevorrichtung deuten, und/oder
- ein Ein- und Auszoomen einer Darstellung auf der Anzeigevorrichtung beispielsweise durch Spreizen und/oder Zusammenballen der Finger einer Hand, und/oder
- ein Hin- und Herschalten zwischen einer Darstellung wenigstens eines Teils eines durch wenigstens eine Außenkamera einsehbaren Bereichs der Fahrzeugumgebung und einer beispielsweise vermittels einer in der Innenrückblickkameraanordnung untergebrachten, bildgebenden Innenkamera verwirklichten Schminkspiegelfunktion, beispielsweise durch muschelförmiges Öffnen und/oder Schließen einer Hand
zur individuellen Einstellung vorgenommen werden.

Vorteile gegenüber dem Stand der Technik ergeben sich unter anderem durch eine Erhöhung der Verkehrssicherheit durch eine intuitive Bedienung bzw. Bedienbarkeit von vermittels der in der Innenrückblickeinheit untergebrachten Einrichtung zur Erkennung von Gesten betätigbarer elektrischer Komponenten eines Kraftfahrzeugs. Die intuitive Bedienbarkeit ergibt sich beispielsweise unter anderem durch eine Betätigung vermittels z.B. Ausführung einer wahlweise individuell vorgebbaren Geste innerhalb einer vorzugsweise in Blickrichtung eines Fahrers des Kraftfahrzeugs vor und/oder unterhalb der Innenrückblickeinheit liegenden Partie des Fahrzeuginnenraums, welche vorzugsweise mit einer durch Vornahme einer individuellen Einstellung zu bedienenden elektrischen Komponente ausgestattet ist.

Weitere Vorteile gegenüber dem Stand der Technik ergeben sich unter anderem dadurch, dass eine Vielzahl von Schaltern, Tastern und Knöpfen eingespart werden können. Dadurch, dass eine Vielzahl unterschiedlicher Gesten erkannt werden können, können vermittels der in der Innenrückblickeinheit untergebrachten Einrichtung zur Erkennung von Gesten eine Vielzahl individueller Einstellungen vorgenommen werden, für die nach dem Stand der Technik eine Vielzahl von im Fahrzeuginnenraum verteilt angeordneten Schaltern, Tastern und Knöpfen erforderlich wären. Dabei kann jeder erfassten Geste ein anderes Steuersignal bzw. ein anderer Steuerbefehl zugeordnet werden. Grundsätzlich kann auch die Zuordnung beliebiger Gesten zu bestimmten Steuersignalen bzw. - befehlen individuell vorgenommen werden, beispielsweise während eines Lernmodus. Vorzugsweise ist hierbei eine Zuordnung bestimmter Gesten zu bestimmten Steuersignalen bzw. -befehlen voreingestellt. Dabei ist denkbar, dass sämtlichen Steuerbefehlen oder einem Teil der Steuerbefehle wahlweise nachträglich individuell Gesten zugeordnet werden können. Hierdurch kann beispielsweise ein individueller Diebstahlschutz eines Kraftfahrzeugs ermöglicht werden. Beispielsweise kann eine Freigabe der Zündung durch eine frei wählbare Geste erfolgen, die individuell zugeordnet werden kann.

Weitere Merkmale der Erfindung ergeben sich aus den Ansprüchen, der Beschreibung und den Zeichnungen.

Ausführungsbeispiele der Erfindung sind nachfolgend anhand der Zeichnung näher erläutert. Darin bezeichnen gleiche Bezugszeichen gleiche oder gleich wirkende Elemente. Es zeigt in schematischer Darstellung:

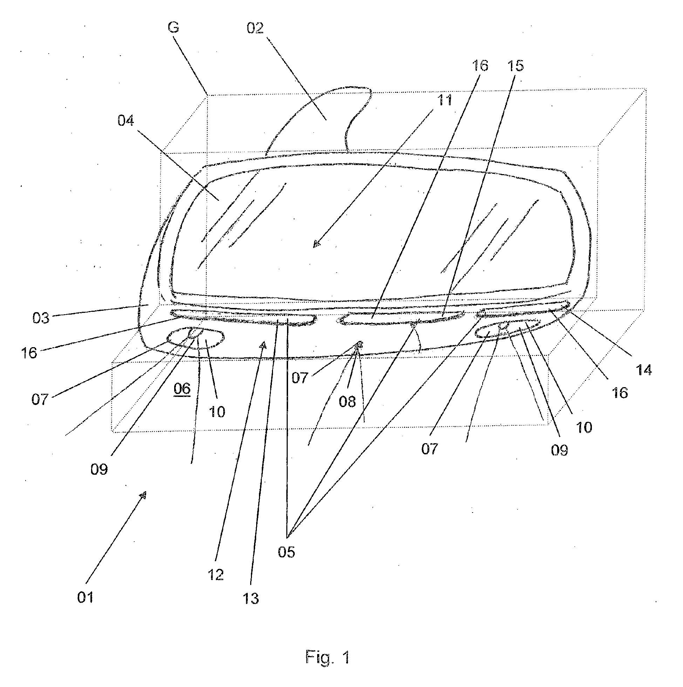

- Fig. 1: eine Innenrückblickeinheit für ein Kraftfahrzeug mit einer Einrichtung zur Erkennung von Gesten zur Vornahme mindestens einer individuellen Einstellung wenigstens der Innenrückblickeinheit vermittels zumindest einer Geste.

Eine in Fig. 1 dargestellte Innenrückblickeinheit 01 für ein Kraftfahrzeug umfasst einen zur kraftfahrzeugseitigen Anordnung vorgesehenen Fuß 02 sowie einen vorzugsweise gelenkig an dem Fuß 02 angeordneten Kopf 03 mit einer Projektionsfläche 04.

Die Innenrückblickeinheit 01 verfügt über eine Einrichtung 05 zur Erkennung von Gesten innerhalb einer durch einen gestrichelten Gitterrahmen G schematisch dargestellten Partie 06 eines Fahrzeuginnenraums, um vermittels zumindest einer innerhalb der Partie 06 ausgeführten Geste mindestens eine individuelle Einstellung wenigstens der Innenrückblickeinheit vorzunehmen. Die Erkennung von Gesten erfolgt vermittels der Einrichtung 05 zur Erkennung von Gesten durch Erfassung zumindest unterschiedlicher Positionen und/oder Orientierungen mindestens eines innerhalb der Partie 06 befindlichen bzw. in die Partie 06 eingebrachten Körperteils eines Fahrzeuginsassen.

Die Partie 06 ist vorzugsweise von einem Fahrer und/oder Beifahrer des Kraftfahrzeugs aus frei zugänglich.

Vorzugsweise befindet sich die Partie 06 des Fahrzeuginnenraums, innerhalb der unterschiedliche Positionen und/oder Orientierungen mindestens eines Körperteils eines Fahrzeuginsassen zur Erkennung von Gesten erfasst werden, von einem Fahrer des Kraftfahrzeugs aus gesehen vor einer vornehmlich durch die Projektionsfläche 04 gebildeten Vorderseite 11 und/oder unterhalb einer Unterseite 12 der Innenrückblickeinheit 01.

Besonders bevorzugt ist hierzu der Fuß 02 der Innenrückblickeinheit 01 zur kraftfahrzeugseitigen Anordnung an einem erhabenen Einbauort im Fahrzeuginnenraum vorgesehen. Als erhabene Einbauorte kommen insbesondere die Innenseite des oberen Teils der Windschutzscheibe des Kraftfahrzeugs oder eine Konsole am Dachhimmel des Kraftfahrzeugs in Frage.

Die mindestens eine vermittels einer oder mehrerer Gesten vornehmbare individuelle Einstellung zumindest der Innenrückblickeinheit 01 betrifft beispielsweise wenigstens eine zumindest zum Teil von der Innenrückblickeinheit 01 beherbergte elektrische Komponente 07, für die vermittels wenigstens eines durch mindestens eine Geste erzeugbaren Steuersignals der Einrichtung 05 zur Erkennung von Gesten eine individuelle Einstellung vorgenommen werden kann.

Bei der mindestens einen elektrischen Komponente 07 kann es sich wenigstens um eine ambiente Innenraumbeleuchtung 08 und/oder um eine fahrer- und/oder beifahrerseitige Lesebeleuchtung 09 und/oder um eine beispielsweise zumindest zum Teil im Bereich der vorderen Sitzplätze eines Kraftfahrzeugs vermittels fahrer- und/oder beifahrerseitiger Lesebeleuchtungen 09 gebildete Innenraumbeleuchtung 10 handeln.

Eine ambiente Innenraumbeleuchtung 08 kann beispielsweise zur individuellen Einstellung vermittels einer oder mehrerer innerhalb der Partie 06 des Fahrzeuginnenraums erkannter Gesten ein- und ausgeschaltet und/oder in ihrer Helligkeit verändert werden. Eine hierzu vorgesehene Geste kann beispielsweise unmittelbar vor und/oder unterhalb der ambienten Innenraumbeleuchtung 08 auszuführen sein.

Eine Lesebeleuchtung 09 kann beispielsweise zur individuellen Einstellung vermittels einer oder mehrerer innerhalb der Partie 06 des Fahrzeuginnenraums erkannter Gesten ein- und ausgeschaltet und/oder in ihrer Helligkeit verändert und/oder in ihrem Betrieb zwischen ausgeschaltet oder bei geöffneter Fahrzeugtür eingeschaltet oder dauerhaft eingeschaltet umgeschaltet werden. Dabei kann eine zur Vornahme einer individuellen Einstellung einer fahrer- oder beifahrerseitigen Lesebeleuchtung 09 vorgesehene Geste unmittelbar unterhalb und/oder vor der entsprechenden fahrer- oder beifahrerseitigen Lesebeleuchtung 09 auszuführen sein.

Eine Innenraumbeleuchtung 10 kann beispielsweise zur individuellen Einstellung vermittels einer oder mehrerer innerhalb der Partie 06 des Fahrzeuginnenraums erkannter Gesten ein- und ausgeschaltet und/oder in ihrer Helligkeit verändert und/oder in ihrem Betrieb zwischen ausgeschaltet oder bei geöffneter Fahrzeugtür eingeschaltet oder dauerhaft eingeschaltet umgeschaltet werden.

Als von der Innenrückblickeinheit 01 zumindest zum Teil beherbergte elektrische Komponenten 07, die zur Vornahme einer individuellen Einstellung der Innenrückblickeinheit 01 mittels innerhalb der Partie 06 des Fahrzeuginnenraums erkannter Gesten gesteuert werden können, kommen alternativ oder zusätzlich eine oder mehrere der nachfolgend nicht abschließend aufgelisteten Einrichtungen in Frage:
- ein elektromotorischer Verstellantrieb zur individuellen Einstellung einer Verstelllage des Kopfs 03 gegenüber dem Fuß 02 oder der Projektionsfläche 04 gegenüber dem Kopf 03 abhängig von Größe und Sitzposition des Fahrers des Kraftfahrzeugs,
- ein Mikrofon und/oder einen oder mehrere Lautsprecher eines Telefonsystems und/oder einer Fahrzeuginnenraumbeschallung, welche zu deren individueller Einstellung ein- und ausgeschaltet und/oder in deren Empfindlichkeit oder Lautstärke verändert werden können,
- mindestens ein Sensor einer Fahrzeuginnenraumklimatisierung, welche zur individuellen Einstellung vollständig ein- und ausgeschaltet, in Bezug auf die einzuhaltende Temperatur im Fahrzeuginnenraum verändert oder zwischen einem Betrieb beispielsweise einer Kältemaschine und deren Nichtbetrieb umgeschaltet werden kann,
- eine von außen durch die Windschutzscheibe hindurch sichtbare Anzeigevorrichtung, welche zu deren individueller Einstellung vollständig ein- und ausgeschaltet sowie in Bezug auf deren Anzeige verstellt werden kann,
- eine vom Fahrzeuginnenraum aus einsehbare Anzeigevorrichtung, welche zu deren individueller Einstellung vollständig ein- und ausgeschaltet sowie in Bezug auf deren Anzeige verstellt werden kann.

Beispielsweise kann die Vornahme individueller Einstellungen bei einem Telefonsystem auch eine Gesprächsannahme und/oder -beendung umfassen, welche vermittels der in der Innenrückblickeinheit 01 untergebrachten Einrichtung 05 zur Erkennung von Gesten gesteuert werden kann.

Bei einer Kraftfahrzeugbeschallungseinrichtung können z.B. Lautstärkeregelung, Sendersuchlauf, Senderspeicherplatzwechsel, Titelsprung, Ein- Ausschalten zur Vornahme individueller Einstellungen vermittels der in der Innenrückblickeinheit 01 untergebrachten Einrichtung 05 zur Erkennung von Gesten gesteuert werden.

Darüber hinaus ist denkbar, dass innerhalb der Partie 06 ausgeführte Gesten auch zur Vornahme von individuellen Einstellungen von außerhalb der Innenrückblickeinheit 01 untergebrachten elektrischen Komponenten des Kraftfahrzeugs dienen können. Hierzu kann die Einrichtung 05 zur Erkennung von Gesten Steuersignale an außerhalb der Innenrückblickeinheit 01 untergebrachte elektrische Komponente des Kraftfahrzeugs weitergeben.

Nicht abschließend aufgezählte Beispiele für vermittels Steuersignalen der in der Innenrückblickeinheit 01 untergebrachten Einrichtung 05 zur Erkennung von Gesten zur Vornahme einer individuellen Einstellung ein- und/oder ausschaltbarer und/oder umschaltbarer und/oder regelbarer, außerhalb der Innenrückblickeinheit 01 im oder am Kraftfahrzeug untergebrachter elektrische Komponenten können sein:
- eine Sendeeinrichtung zur Fernsteuerung eines automatischen Torantriebs, beispielsweise eines Garagentoröffners,
- eine beispielsweise elektromotorische Kofferraumverriegelung und/oder ein elektromotorischer Antrieb zum Öffnen und/oder Schließen eines Kofferaumdeckels,
- eine Panik- bzw. Notver- und/oder Entriegelung der Fahrzeugtüren,
- ein Ein- und/oder Ausschalten der Warnblinklichtfunktion der Wiederholblinkleuchten des Kraftfahrzeugs.

Die elektromotorische Kofferraumverriegelung und/oder der elektromotorische Antrieb zum Öffnen und/oder Schließen des Kofferraumdeckels sind vorzugsweise nur bei stehendem, z.B. in Schaltstufe P oder N eines Automatikgetriebes abgestelltem Kraftfahrzeug zu betätigen.

Grundsätzlich kann jede beliebige, vorzugsweise eindeutige Geste, jedem beliebigen Steuersignal zur Vornahme einer individuellen Einstellung einer beliebigen, von der Innenrückblickeinheit 01 zumindest zum Teil beherbergten elektrischen Komponente 07 oder außerhalb der Innenrückblickeinheit 01 untergebrachten elektrischen Komponente zugeordnet werden.

Betrifft eine vermittels einer ersten Geste vorzunehmende individuelle Einstellung der beispielsweise das Ein- oder Ausschalten einer elektrischen Komponente 07 der Innenrückblickeinheit 01 oder einer außerhalb der Innenrückblickeinheit 01 untergebrachte elektrische Komponente, kann das Ausstrecken eines Fingers beispielsweise einem Einschaltsignal zugeordnet werden, wohingegen das Ausstrecken zweier Finger einem Ausschaltsignal zugeordnet werden kann. Die Auswahl der entsprechenden elektrischen Komponente 07 kann durch eine zweite Geste erfolgen, die innerhalb eines vorgebbaren Zeitintervalls vor oder nach der ersten Geste ausgeführt werden muss, um die entsprechende elektrische Komponente 07 auszuwählen. Dadurch ergibt sich eine Folge von Gesten, welche letztendlich durch Auswahl der elektrischen Komponente und Zuordnung eines Steuersignals zur Vornahme einer individuellen Einstellung wenigstens der Innenrückblickeinheit dient.

Ebenso ist denkbar, jeder einzelnen Geste die Vornahme einer bestimmten individuellen Einstellung einer bestimmten elektrischen Komponente zuzuordnen.

Darüber hinaus kann auch eine zeitliche Abfolge einer gleicher Gesten einer Vornahme einer bestimmten individuellen Einstellung einer bestimmten elektrischen Komponente zugeordnet werden. Unterscheidungsmöglichkeiten ergeben sich hierbei durch die Anzahl an Wiederholungen gleicher Gesten. Beispielsweise kann ein Einschaltsignal einem einmaligen Ausstrecken eines Fingers zugeordnet werden, wohingegen ein Ausschaltsignal einem zweimaligen Ausstrecken eines Fingers zugeordnet werden kann.

Es ist ersichtlich, dass sich nur hieraus bereits eine Vielzahl unterschiedlicher Steuersignale erzeugen lassen, indem beispielsweise die Anzahl ausgestreckter Finger sowie die Anzahl an Wiederholungen der selben Geste berücksichtigt werden.

Eine noch größere Anzahl unterschiedlicher Steuersignale kann beispielsweise erzeugt werden, indem nicht nur die Einnahme von Position und Orientierung eines oder mehrerer Körperteile zur Erkennung einer Geste erfasst werden, sondern zusätzlich auch noch deren zeitliche Änderung. Beispielsweise kann so ein Öffnen einer zu einer Faust zusammengeballten Hand oder ein Zusammenballen der Hand zu einer Faust, das Spreizen und/oder Schließen bzw. gegenseitige Anlegen von Fingern, das Aufeinanderzuführen und/oder voneinander Entfernen von Fingerspitzen als individuelle Gesten erkannt und verschiedenen Steuersignalen der Einrichtung zur Erkennung von Gesten zugeordnet werden. Vorzugsweise sind hierbei entgegengesetzte Gesten einander gegenseitig aufhebenden Steuersignalen zugeordnet. Beispielsweise kann ein Vorbeiwinken von links nach rechts ein Steuersignal für eine elektrische Komponente 07 erzeugen, welches ein Steuersignal aufhebt, das einem Vorbeiwinken von rechts nach links zugeordnet ist.

Insbesondere sind solche Gesten, bei denen ein Öffnen und/oder Schließen und/oder ein Spreizen und/oder Zusammenballen und/oder ein Aufeinanderzuführen und/oder voneinander Entfernen vorkommt geeignet, Steuersignale zu erzeugen, vermittels denen eine Regelung zur individuellen Einstellung vorgenommen werden soll. Nicht abschließend aufgeführte Beispiele hierfür sind:
- die Regelung einer Lautstärke und/oder Empfindlichkeit,
- die Regelung eines elektromotorischen Verstellantriebs, mit dem beispielsweise die Verstelllage des Kopfs 03 der Innenrückblickeinheit gegenüber dem Fuß 02 in Abhängigkeit von der Sitzposition des Fahrers einstellbar ist,
- die Regelung der Helligkeit
   - einer ambienten Innenraumbeleuchtung 08,
   - einer Lesebeleuchtung 09,
   - einer Innenraumbeleuchtung 10,
- die Regelung der Helligkeit der Projektionsfläche 04, beispielsweise bei einer als Anzeigevorrichtung einer Innenrückblickkameraanordnung ausgeführten Projektionsfläche 04,
- die Regelung der Abblendung der Projektionsfläche 04, beispielsweise bei einer als elektrochromatisch abblendbares Spiegelglas einer Innenrückblickspiegelanordnung ausgeführten Projektionsfläche 04.

Dabei kann die Stärke bzw. Weite des Öffnens und/oder Schließens und/oder Spreizens und/oder Zusammenballens und/oder Aufeinanderzuführens und/oder voneinander Entfernens als Maß für den Grad der Regelung dienen, beispielsweise linear proportional der Regelung des zugeordneten Steuersignals sein. Genügt dabei die Stärke bzw. Weite eines Öffnens und/oder Schließens und/oder Spreizens und/oder Zusammenballens und/oder Aufeinanderzuführens und/oder voneinander Entfernens nicht, um einen gewünschten Grad der Regelung zu erhalten, kann die nochmalige Ausführung der Geste vorgesehen werden.

Ebenso ist denkbar, dass die Länge der Strecke eines Vorbeiwinkens als ein Maß für den Grad einer Regelung verwendet wird.

Auch können gleichartige Gesten abhängig von der Richtung ihrer Ausführung unterschiedlichen Steuersignalen zugeordnet werden. Beispielsweise kann ein Umschalten zwischen mehreren Funktionen einer in der Innenrückblickeinheit untergebrachten elektrischen Komponente 07 oder einer außerhalb der Innenrückblickeinheit untergebrachten elektrischen Komponente durch Vorbeiwinken in der einen oder anderen Richtung beispielsweise von links nach rechts und umgekehrt erfolgen. Beispielsweise kann eine Aufwärts- oder Abwärtsregelung und/oder ein Hin- und Herschalten durch ein Vorbeiwinken von hinten nach vorn und umgekehrt erfolgen. Das Vorbeiwinken in einer ersten Richtung und in einer zweiten, beispielsweise entgegengesetzten Richtung ist dabei vorzugsweise einander gegenseitig aufhebenden Steuersignalen zugeordnet. Das Vorbeiwinken muss hierbei durch die Partie 06 hindurch erfolgen.

Ebenfalls ist denkbar, dass die Ein- und/oder Ausschaltsignale und/oder Umschalt- und/oder Regelungssignale bildenden Steuersignale der Einrichtung 05 zur Erkennung von Gesten abhängig von der Dauer der Ausführung der Geste sind. Beispielweise kann eine kurze Geste ein Ein- oder Ausschaltsignal bilden, wohingegen eine lang ausgeführte Geste ein Umschalt und/oder Regelungssignal erzeugen kann.

Eine weitere Möglichkeit ergibt sich durch variable Eintrittspositionen der Geste in die Partie 06. Beispielsweise kann ein mittiges Eintreten ein Ein- und/oder Ausschaltsignal erzeugen, wohingegen ein Eintreten auf einer ersten Seite seitlich der Mitte ein Regelungssignal und ein Eintreten auf einer zweiten Seite seitlich der Mitte ein Umschaltsignal erzeugen kann. Dabei können Gesten an gegenüberliegenden Eintrittspositionen entgegengesetzte bzw. einander aufhebende Regelungs- und/oder Umschaltsignale erzeugen. Eine weitere Möglichkeit ergibt sich durch die Zuordnung einer Geste zu einer in der Innenrückblickeinheit 01 untergebrachten elektrischen Komponente 07 anhand der Eintrittsposition. Wird beispielsweise auf eine an der Unterseite 12 der Innenrückblickeinheit 01 angeordnete Leseleuchte 09 gedeutet, kann diese ein-und durch wiederholtes Deuten wieder ausgeschaltet werden. Dies ermöglicht eine besonders verkehrssichere und intuitive Vornahme individueller Einstellungen der Innenrückblickeinheit 01.

Wichtig ist hervorzuheben, dass auch eine beliebige Kombination der beschriebenen unterschiedlichen Arten der Erzeugung von Ein- und/oder Ausschaltsignale und/oder Regelungssignale und/oder Umschaltsignale bildenden Steuersignalen vermittels der in der Innenrückblickeinheit 01 untergebrachten Einrichtung 05 zur Erkennung von Gesten möglich ist.

Die Einrichtung 05 zur Erkennung von Gesten kann eine oder mehrere, beispielsweise bilderfassende bzw. bildgebende Kameras 13, 14 umfassen, welche die Partie 06 des Fahrzeuginnenraums überwachen. Mindestens eine Kamera 13 kann dabei in einem für das menschliche Auge sichtbaren Wellenlängenbereich arbeiten. Alternativ oder zusätzlich kann zumindest eine Kamera 14 im infraroten Wellenlängenbereich arbeiten.

Darüber hinaus kann die Einrichtung 05 zur Erkennung von Gesten anstelle der Kameras 13, 14 oder zusätzlich zu diesen einen oder mehrere Sensoren 15, beispielsweise mindestens einen Ultraschallsensor oder mindestens einen magnetischen Sensor oder mindestens einen kapazitiven Sensor oder eine Kombination solcher Sensoren umfassen, von denen vorzugsweise jeder für sich die Partie 06 des Fahrzeuginnenraums überwacht.

Die Kameras 13, 14 sowie der Sensor 15 können von einer gemeinsamen oder mehreren einzelnen, beispielsweise streifenförmige Abdeckungen 16 geschützt sein. Die Abdeckungen 16 sind für den entsprechenden Wellenlängenbereich, in dem die jeweilige darunter geschützt angeordnete Kamera 13, 14 bzw. der jeweilige darunter geschützt angeordnete Sensor 15 arbeitet, transparent. Kameras können auch hinter den Glas angeordnet sein, wobei sie sichtbar oder verdeckt eingebaut werden.

Um Fehlbedienungen, beispielsweise durch Gestikulieren etwa während eines Gesprächs beispielsweise von Fahrzeuginsassen untereinander zu vermeiden, ist die Partie 06 des Fahrzeuginnenraums, innerhalb der unterschiedliche Positionen und/oder Orientierungen mindestens eines Körperteils eines Fahrzeuginsassen zur Erkennung von Gesten erfasst werden, vorzugsweise eng begrenzt.

Um die Partie 06 des Fahrzeuginnenraums eng zu begrenzen, sind mehrere technische Lösungen denkbar.

Eine einfache technische Lösung kann sich beispielsweise eines Sensors 15 bedienen, welcher bei Unterschreitung eines Mindestabstands wenigstens eines Körperteils eines Fahrzeuginsassen, wie etwa eines Fingers, einer Hand, eines Arms zu der Innenrückblickeinheit 01, beispielsweise zu deren Vorderseite 11 und/oder zu deren Unterseite 12 unterschreitet, einen Steuerbefehl zur Aktivierung der Erkennung von Gesten erteilt. Die Erfassung von Positionen und/oder Orientierungen des mindestens einen Körperteils innerhalb der Partie 06 erfolgt dann vermittels der Kameras 13, 14 so lange, bis das Körperteil den Mindestabstand wieder überschreitet und die Partie 06 des Fahrzeuginnenraums wieder verlässt.

Eine alternative oder zusätzliche technische Lösung zur engen Begrenzung der Partie 06 des Fahrzeuginnenraums sieht die Verwendung mehrerer Kameras 13, 14 und/oder gerichtet sensitiver Sensoren 15 vor. Vorzugsweise sind die Kameras 13, 14 und/oder Sensoren 15 an unterschiedlichen Einbauorten der Innenrückblickeinheit untergebracht. Die Kameras 13, 14 und/oder Sensoren 15 überwachen von ihren Einbauorten aus jeweils einen beispielsweise kegelförmigen Raumbereich, dessen Spitze am jeweiligen Einbauort liegt und einen Öffnungswinkel aufweist, der dem von der jeweiligen Kamera 13, 14 bzw. dem jeweiligen Sensor 15 von dessen Einbauort aus gesehen überwachten Raumwinkel entspricht. Die Raumbereiche überschneiden dabei einander, wobei der dadurch entstehende Schnittraum die Partie 06 bildet. Die Partie 06 ist hierbei eng begrenzt, weil Gesten zu ihrer Erkennung vorzugsweise im Sichtbereich aller beteiligten Kameras 13, 14 und/oder Sensoren 15 ausgeführt werden müssen.

Die Erfindung ist insbesondere im Bereich der Herstellung von Innenrückblickeinheiten für Kraftfahrzeuge gewerblich anwendbar.

### Bezugszeichenliste

- 01: Innenrückblickeinheit
- 02: Fuß
- 03: Kopf
- 04: Projektionsfläche
- 05: Einrichtung zur Erkennung von Gesten
- 06: Partie des Fahrzeuginnenraums
- 07: elektrische Komponente
- 08: ambiente Innenraumbeleuchtung
- 09: Lesebeleuchtung
- 10: Innenraumbeleuchtung
- 11: Vorderseite
- 12: Unterseite
- 13: Kamera
- 14: Kamera
- 15: Sensor
- 16: Abdeckung

- G: Gitterrahmen zur schematischen Darstellung der Partie 06

## Patentansprüche

1. Innenrückblickeinheit (01) für ein Kraftfahrzeug mit einem Fuß (02) sowie einem an diesem angeordneten Kopf (03) mit einer Projektionsfläche (04),
**gekennzeichnet durch**
eine Einrichtung (05) zur Erkennung von Gesten **durch** Erfassung zumindest unterschiedlicher Positionen und/oder Orientierungen mindestens eines Körperteils eines Fahrzeuginsassen innerhalb einer Partie (06, G) eines Fahrzeuginnenraums zur Vornahme mindestens einer individuellen Einstellung wenigstens der Innenrückblickeinheit (01) vermittels zumindest einer Geste.

2. Innenrückblickeinheit nach Anspruch 1,
**dadurch gekennzeichnet,**
**dass** die Einrichtung (05) zur Erkennung von Gesten mindestens eine bilderfassende bzw. bildgebende Kamera (13, 14) umfasst, welche wenigstens die Partie (06, G) des Fahrzeuginnenraums überwacht.

3. Innenrückblickeinheit nach Anspruch 2,
**dadurch gekennzeichnet,**
**dass** mindestens eine Kamera (13) in einem für das menschliche Auge sichtbaren Wellenlängenbereich arbeitet.

4. Innenrückblickeinheit nach Anspruch 2 oder 3,
**dadurch gekennzeichnet,**
**dass** mindestens eine Kamera (14) im infraroten Wellenlängenbereich arbeitet.

5. Innenrückblickeinheit nach einem der vorhergehenden Ansprüche,
**dadurch gekennzeichnet,**
**dass** die Einrichtung (05) zur Erkennung von Gesten mindestens einen Ultraschallsensor (15) umfasst, welcher wenigstens die Partie (06, G) des Fahrzeuginnenraums überwacht.

6. Innenrückblickeinheit nach einem der vorhergehenden Ansprüche,
**dadurch gekennzeichnet,**
**dass** die Einrichtung (05) zur Erkennung von Gesten mindestens einen magnetischen und/oder kapazitiven Sensor (15) umfasst, welcher wenigstens die Partie (06, G) des Fahrzeuginnenraums überwacht.

7. Innenrückblickeinheit nach einem der Ansprüche 2 bis 6,
**dadurch gekennzeichnet,**
**dass** die Partie (06, G) des Fahrzeuginnenraums begrenzt ist, indem zwei oder mehrere an unterschiedlichen Einbauorten untergebrachte Kameras (13, 14) und/oder Sensoren (15) vorgesehen sind, welche jeweils von ihrem Einbauort aus gesehen einen bestimmten Raumwinkel überwachen und auf einen bestimmten Überwachungsort ausgerichtet sind, wobei die von den Kameras (13, 14) und/oder Sensoren (15) überwachten Raumbereiche einen von allen beteiligten Kameras (13, 14) und/oder Sensoren (15) gemeinsam überwachten Schnittraum aufweisen, welcher die Partie (06, G) des Fahrzeuginnenraums bildet.

8. Innenrückblickeinheit nach einem der vorhergehenden Ansprüche,
**dadurch gekennzeichnet,**
**dass** die Erfassung sowohl die Einnahme, als auch die zeitliche Änderung von Position und/oder Orientierung mindestens eines Körperteils einschließt.

9. Innenrückblickeinheit nach einem der vorhergehenden Ansprüche,
**dadurch gekennzeichnet,**
**dass** die Einrichtung (05) zur Erkennung von Gesten abhängig von verschiedenen erkannten Gesten und/oder von der Anzahl an Wiederholungen gleichartiger erkannter Gesten und/oder von einer Folge von Gesten unterschiedliche Steuersignale zur Vornahme mindestens einer individuellen Einstellung wenigstens der Innenrückblickeinheit (01) erzeugt.

10. Innenrückblickeinheit nach einem der vorhergehenden Ansprüche,
**dadurch gekennzeichnet,**
**dass** der Fuß (02) der Innenrückblickeinheit (01) zur kraftfahrzeugseitigen Anordnung an einem erhabenen Einbauort im Fahrzeuginnenraum vorgesehen ist, wobei die Partie (06, G) des Fahrzeuginnenraums, innerhalb der die Erfassung zumindest unterschiedlicher Positionen und/oder Orientierungen mindestens eines Körperteils eines Fahrzeuginsassen durch die Einrichtung (05) zur Erkennung von Gesten erfolgt, von einem Fahrer des Kraftfahrzeugs aus gesehen vor und/oder unterhalb der Innenrückblickeinheit (01) liegt.

11. Innenrückblickeinheit nach einem der vorhergehenden Ansprüche,
**gekennzeichnet durch**
wenigstens eine zumindest zum Teil von der Innenrückblickeinheit (01) beherbergte elektrische Komponente (07), für die vermittels wenigstens eines **durch** mindestens eine Geste erzeugbaren Steuersignals der Einrichtung (05) zur Erkennung von Gesten eine individuelle Einstellung vorgenommen werden kann.

12. Innenrückblickeinheit nach Anspruch 11,
**dadurch gekennzeichnet,**
**dass** es sich bei der mindestens einen elektrischen Komponente (07) wenigstens um:
- einen elektromotorischen Verstellantrieb zur Einstellung einer individuellen Verstelllage des Kopfs (03) gegenüber dem Fuß (02) oder der Projektionsfläche (04) gegenüber dem Kopf (03) abhängig von Größe und Sitzposition des Fahrers des Kraftfahrzeugs, und/oder eine Innenraumbeleuchtung (10), welche zur individuellen Einstellung in ihrem Betrieb zwischen ausgeschaltet oder bei geöffneter Fahrzeugtür eingeschaltet oder dauerhaft eingeschaltet umgeschaltet und/oder in ihrer Helligkeit verändert werden kann, ünd/oder
- eine ambiente Innenraumbeleuchtung (08), welche zur individuellen Einstellung ein- und ausgeschaltet und/oder in ihrer Helligkeit verändert werden kann, und/oder
- eine Lesebeleuchtung (09), welche zur individuellen Einstellung einund ausgeschaltet und/oder in ihrer Helligkeit verändert und/oder in ihrem Betrieb zwischen ausgeschaltet oder bei geöffneter Fahrzeugtür eingeschaltet oder dauerhaft eingeschaltet umgeschaltet werden kann, und/oder
- ein Mikrofon und/oder einen oder mehrere Lautsprecher eines Telefonsystems und/oder einer Fahrzeuginnenraumbeschallung, welche zu deren individueller Einstellung ein- und ausgeschaltet und/oder in deren Empfindlichkeit oder Lautstärke verändert werden können, und/oder
- mindestens einen Sensor einer Fahrzeuginnenraumklimatisierung, welche zur individuellen Einstellung vollständig ein- und ausgeschaltet, in Bezug auf die einzuhaltende Temperatur im Fahrzeuginnenraum verändert oder zwischen einem Betrieb beispielsweise einer Kältemaschine und deren Nichtbetrieb umgeschaltet werden kann, und/oder
- eine von außen durch die Windschutzscheibe hindurch sichtbare Anzeigevorrichtung, welche zu deren individueller Einstellung vollständig ein- und ausgeschaltet sowie in Bezug auf deren Anzeige verstellt werden kann, und/oder
- eine vom Fahrzeuginnenraum aus einsehbare Anzeigevorrichtung, welche zu deren individueller Einstellung vollständig ein- und ausgeschaltet sowie in Bezug auf deren Anzeige verstellt werden kann handelt.

13. Innenrückblickeinheit nach einem der vorhergehenden Ansprüche,
**gekennzeichnet durch**
wenigstens eine außerhalb der Innenrückblickeinheit (01) untergebrachte elektrische Komponente des Kraftfahrzeugs, für die vermittels wenigstens eines **durch** mindestens eine Geste erzeugbaren Steuersignals der Einrichtung (05) zur Erkennung von Gesten eine individuelle Einstellung vorgenommen werden kann.

14. Innenrückblickeinheit nach einem der vorhergehenden Ansprüche,
**dadurch gekennzeichnet,**
**dass** die Innenrückblickeinheit (01) als eine Innenrückblickspiegeleinheit ausgebildet ist, wobei ein Spiegelglas die Projektionsfläche (04) umfasst.

15. Innenrückblickeinheit nach einem der Ansprüche 1 bis 14,
**dadurch gekennzeichnet,**
**dass** die Innenrückblickeinheit (01) als eine Innenrückblickkameraanordnung ausgebildet ist, wobei die Projektionsfläche (04) von einer Anzeigevorrichtung zur wenigstens zeitweise Darstellung mindestens eines Ausschnitts wenigstens eines Teils eines von zumindest einer Außenkamera der Innenrückblickkameraanordnung eingesehenen Bereichs der Fahrzeugumgebung umfasst ist.

## Claims

1. Interior rear view unit (01) for a motor vehicle comprising a base (02) and a head (03) attached to it with a projection surface (04), **characterized by**
a facility (05) for recognizing gestures by at least detecting different positions and/or orientations of at least one body part of a vehicle occupant in a portion (06, G) of a vehicle interior aimed at making at least one individual adjustment of at least the interior rear view unit (01) by means of at least one gesture.

2. Interior rear view unit according to claim 1,
**characterized in that**
the facility (05) for recognizing gestures includes at least one image sensing or imaging camera (13, 14), which
monitors at least the portion (06, G) of the vehicle interior.

3. Interior rear view unit according to claim 2,
**characterized in that**
at least one camera (13) works in the wavelength range that is visible to the human eye.

4. Interior rear view unit according to claim 2 or 3,
**characterized in that**
at least one camera (14) works in the infrared wavelength range.

5. Interior rear view unit according to any one of the preceding claims,
**characterized in that**
the facility (05) for recognizing gestures includes at least one ultrasonic sensor (15), which monitors at least the portion (06, G) of the vehicle interior.

6. Interior rear view unit according to any one of the preceding claims,
**characterized in that**
the facility (05) for recognizing gestures includes at least one magnetic and/or capacitive sensor (15), which
monitors at least the portion (06, G) of the vehicle interior.

7. Interior rear view unit according to any one of claims 2 through 6,
**characterized in that**
the portion (06, G) of the vehicle interior is limited **in that** two or more cameras (13/14) and/or sensors (15) are provided at various installation sites, each monitoring a specific spatial angle from their respective installation site and being orientated toward a specific monitoring site, wherein the spatial sections monitored by the cameras (13, 14) and/or sensors (15) comprise a common monitored intersection of spaces which all cameras (13, 14) and/or sensors (15) involved monitor jointly and which defines the portion (06, G) of the vehicle interior.

8. Interior rear view unit according to any one of the preceding claims,
**characterized in that**
the detection includes both the taking of a position and any temporal change in position and/or orientation of at least one body part.

9. Interior rear view unit according to any one of the preceding claims,
**characterized in that**
the facility (05) for recognizing gestures generates different control signals for making at least one individual adjustment of the interior rear view unit (01) depending on various recognized gestures and/or of the number of repetitions of similar recognized gestures and/or of a sequence of gestures.

10. Interior rear view unit according to any one of the preceding claims,
**characterized in that**
the base (02) of the interior rear view unit (01) is provided at a raised installation site in the vehicle interior for attachment to the vehicle, wherein the portion (06, G) of the vehicle interior within which at least different positions and/or orientations of at least one body part of a vehicle occupant are detected by the facility (05) for recognizing gestures is located in front of, and/or below, the inner rear view unit (01) from a vehicle driver's point of view.

11. Interior rear view unit according to any one of the preceding claims,
**characterized by**
at least one electrical component (07) that is at least partially housed by the interior rear view unit (01) and for which an individual adjustment can be made by means of at least one control signal from the facility (05) for recognizing gestures, which signal can be generated by at least one gesture.

12. Interior rear view unit according to claim 11,
**characterized in that**
the at least one electrical component (07)
is at least:
- an electric adjustment drive for setting an individual adjusting position of the head (03) relative to the base (02) or of the projection surface (04) relative to the head (03) depending on the vehicle driver's height and seating position, and/or
- an interior lighting arrangement (10), the mode of which can be toggled between off or on when a vehicle door is open or permanently on, and/or the brightness of which can be changed for individual adjustment, and/or
- an ambient interior lighting arrangement (08), which can be switched on or off and/or the brightness of which can be changed for individual adjustment, and/or
- a reading light arrangement (09), which can be switched on and off and/or the brightness of which can be changed and/or the mode of which can be toggled between off or on when a vehicle door is open or permanently on for individual adjustment, and/oder
- a microphone and/or one or several speakers of a telephone system and/or a sound system for the vehicle interior, which can be switched on or off and/or the sensitivity or volume of which can be changed for individual adjustment, and/or
- at least one sensor of an air conditioning system for the vehicle interior, which system can be switched completely on or off, changed with respect to the temperature to be maintained in the vehicle interior, or the mode of which can be toggled between running or not running a cooling unit for individual adjustment, and/or
- a display device that is visible from outside through the windshield, which device can be switched completely on and off, or the display of which can be changed for individual adjustment, and/or
- a display device that is visible from the vehicle interior, which device can be switched completely on and off, or the display of which can be changed for individual adjustment.

13. Interior rear view unit according to any one of the preceding claims,
**characterized by**
at least one electrical component (07) of the motor vehicle that is installed outside the interior rear view unit (01) and for which an individual adjustment can be made by means of at least one control signal from the facility (05) for recognizing gestures, which signal can be generated by at least one gesture.

14. Interior rear view unit according to any one of the preceding claims,
**characterized in that**
the interior rear view unit (01) is designed as an interior rear view mirror unit wherein a mirror glass includes the projection surface (04).

15. Interior rear view unit according to any one of claims 1 through 14,
**characterized in that**
the interior rear view unit (01) is designed as an interior rear view camera system, wherein the projection surface (04) is encompassed by a display unit for at least temporarily displaying at least a portion of the range of the vehicle environment captured by at least one exterior camera of the inner rear view camera system.

## Revendications

1. Dispositif intérieur de vision arrière (01) destiné à un véhicule automobile, ayant une embase (02) ainsi qu'une tête (03) agencée sur celle-ci, avec une surface de projection (04),
**caractérisé par**
un dispositif (05) pour reconnaître des gestes par détection d'au moins des positions et/ou orientations différentes d'une partie de corps d'un passager de véhicule automobile situé à l'intérieur d'une partie (06, G) d'un habitacle de véhicule automobile, pour procéder à au moins un réglage individuel d'au moins le dispositif intérieur de vision arrière (01) au moyen d'au moins un geste.

2. Dispositif intérieur de vision arrière selon la revendication 1,
**caractérisé en ce que**
le dispositif (05) pour reconnaître des gestes comporte au moins une caméra de prise d'image ou caméra d'imagerie (13, 14), qui surveille au moins la partie (06, G) de l'habitacle de véhicule automobile.

3. Dispositif intérieur de vision arrière selon la revendication 2,
**caractérisé en ce que**
au moins une caméra (13) fonctionne dans une plage de longueur d'onde visibles par l'oeil humain.

4. Dispositif intérieur de vision arrière selon la revendication 2 ou 3,
**caractérisé en ce que**
au moins une caméra (14) fonctionne dans la plage de longueurs d'onde infrarouge.

5. Dispositif formant rétroviseur intérieur selon l'une quelconque des revendications précédentes,
**caractérisé en ce que**
le dispositif (05) pour reconnaître des gestes comporte au moins un capteur à ultrasons (15), qui surveille au moins la partie (06, G) de l'habitacle de véhicule automobile.

6. Dispositif intérieur de vision arrière selon l'une quelconque des revendications précédentes,
**caractérisé en ce que**
le dispositif (05) pour reconnaître des gestes comporte au moins un capteur magnétique et/ou capacitif (15), qui surveille au moins la partie (06, G) de l'habitacle de véhicule automobile.

7. Dispositif intérieur de vision arrière selon l'une quelconque des revendications 2 à 6,
**caractérisé en ce que**
la partie (06, G) de l'habitacle de véhicule automobile est délimitée, dans laquelle deux ou plus de deux caméras (13, 14) et / ou capteurs (15) installés à divers emplacements d'installation sont prévus, qui surveillent, chacun vu à partir de son emplacement d'installation , un angle solide déterminé, de telle sorte que les zones spatiales surveillées par les caméras (13, 14) et/ou les capteurs (15) comportent un tronçon d'espace surveillé en commun par toutes les caméras (13, 14) et/ou tous les capteurs (15) impliqués, qui constitue la partie (06, G) de l'habitacle de véhicule automobile.

8. Dispositif intérieur de vision arrière selon l'une quelconque des revendications précédentes,
**caractérisé en ce que**
que la détection englobe non seulement la prise, mais également le changement de position et/ou d'orientation d'au moins une partie du corps au cours du temps.

9. Dispositif intérieur de vision arrière selon l'une quelconque des revendications précédentes,
**caractérisé en ce que**
le dispositif (05), pour reconnaître des gestes en fonction de différents gestes identifiés et/ou de la pluralité de répétitions de gestes identifiés du même type et/ou d'une séquence de gestes, génère des signaux de commande différents pour effectuer au moins un réglage individuel d'au moins le dispositif intérieur de vision arrière (01).

10. Dispositif intérieur de vision arrière selon l'une quelconque des revendications précédentes,
**caractérisé en ce que**
l'embase (02) du dispositif intérieur de vision arrière (01) est prévue pour un agencement sur le côté du véhicule automobile en un lieu d'implantation surélevé dans l'habitacle du véhicule automobile, la partie (06, G) de l'habitacle de véhicule automobile, à l'intérieur de laquelle la saisie d'au moins des positions et/ou orientations différentes d'une partie du corps d'un passager du véhicule automobile survient au moyen du dispositif (05) pour reconnaître des gestes, s'étendant depuis le conducteur du véhicule automobile devant et/ou en dessous du dispositif intérieur de vision arrière (01).

11. Dispositif intérieur de vision arrière selon l'une quelconque des revendications précédentes,
**caractérisé par**
au moins un composant électrique (07) pouvant être logé au moins en partie à l'intérieur du dispositif intérieur de vision arrière (01), pour permettre la réalisation de la fourniture d'au moins un signal de commande, pouvant être obtenu à partir d'au moins un geste, au dispositif (05) pour reconnaître un réglage individuel à partir de gestes.

12. Dispositif intérieur de vision arrière selon la revendication 11,
**caractérisé en ce que**
le au moins un composant électrique (07) est au moins un composant parmi :
- un dispositif de réglage électromoteur pour établir une position de réglage individuelle de la tête (03) contre l'embase (02) ou de la surface de projection (04) contre la tête (03) en fonction de la taille et de la position d'assise du conducteur du véhicule automobile, et/ou
- un éclairage intérieur (10) qui peut être commuté, dans son fonctionnement pour un réglage individuel, entre une coupure, une mise en marche à l'ouverture d'une porte du véhicule automobile ou une mise en marche permanente, et/ou dont la luminosité peut être modifiée, et/ou
- un éclairage intérieur ambiant (08), qui peut être mis en marche et coupé pour un réglage individuel, et/ou dont la luminosité peut être modifiée, et/ou
- une lampe de lecture (09), qui peut être mise en marche et coupée pour un réglage individuel, et/ou dont la luminosité peut être modifiée et/ou qui peut être commutée dans son fonctionnement entre une coupure ou une mise en marche par l'ouverture d'une porte du véhicule automobile ou une mise en marche de manière permanente, et/ou
- un microphone et/ou un ou plusieurs haut-parleurs d'un système de téléphone et/ou d'un système de sonorisation d'habitacle de véhicules automobiles, qui peut être mis en marche et coupé pour ledit réglage individuel et/ou dont la sensibilité ou le volume peut être modifié(e), et/ou
- au moins un capteur d'une climatisation d'habitacle de véhicule automobile, qui peut être complètement mis en marche ou coupé pour un réglage individuel, afin de modifier la température en vigueur dans l'habitacle de véhicule automobile, ou qui peut être commuté entre un fonctionnement par exemple en tant que refroidisseur et son non-fonctionnement, et/ou
- un dispositif d'affichage visible depuis l'extérieur à travers le pare-brise, qui peut être complètement mis en marche et coupé pour ledit réglage individuel, ainsi que pour régler ledit affichage, et/ou
- un dispositif d'affichage visible depuis l'habitacle de véhicule automobile, qui peut être complètement mis en marche et coupé pour ledit réglage individuel, ainsi que pour régler ledit affichage.

13. Dispositif intérieur de vision arrière selon l'une quelconque des revendications précédentes,
**caractérisé par**
au moins un composant électrique du véhicule automobile logé à l'extérieur du dispositif intérieur de vision arrière (01), pour permettre la réalisation de la fourniture d'au moins un signal de commande, pouvant être obtenu à partir d'au moins un geste, au dispositif (05) pour reconnaître un réglage individuel à partir de gestes.

14. Dispositif intérieur de vision arrière selon l'une quelconque des revendications précédentes,
**caractérisé en ce que**
le dispositif intérieur de vision arrière (01) est réalisé sous la forme d'un dispositif formant rétroviseur intérieur, dans lequel un miroir de rétroviseur comporte la surface de projection (04).

15. Dispositif intérieur de vision arrière selon l'une quelconque des revendications 1 à 14, **caractérisé en ce que**
le dispositif intérieur de vision arrière (01) est réalisé sous la forme d'un dispositif intérieur de vision arrière à caméras, dans lequel la surface de projection (04) d'un dispositif d'affichage est incluse pour afficher au moins temporairement au moins un tronçon d'au moins une partie d'une zone de l'environnement du véhicule automobile examinée par au moins une caméra extérieure du dispositif intérieur de vision arrière à caméras.
